# DEMANDE DE BREVET EUROPEEN

(11) **EP 4 254 693 A1**
(43) Date de publication de la demande: **04.10.2023**
(21) Numéro de dépôt: 23165673.7
(22) Date de dépôt: 30.03.2023
(51) Int. Cl.: H02G 3/08, H02G 3/12

(54) **BOITIER DE PROTECTION**

(30) Priorité: 31.03.2022 FR 2202969; 18.05.2022 FR 2204741
(71) Demandeur: SAINT-GOBAIN PLACO, 92400 Courbevoie (FR)
(72) Inventeur: POMME, Sylvain, 92400 COURBEVOIE (FR); LEMERLE, Christophe, 92400 COURBEVOIE (FR)
(74) Mandataire: Saint-Gobain Recherche

(57) **Abrégé**

L'invention a pour objet un boîtier de protection (1) incendie comprenant une paroi périphérique (10) fermée par un fond (12) pour former un logement (14) configuré pour recevoir au moins un dispositif électrique (20), caractérisé en ce qu'au moins un parmi la paroi périphérique et le fond comprend au moins une ouverture pour le passage d'au moins un fil électrique et en ce que la paroi périphérique et le fond comprennent au moins un matériau résistant à l'incendie choisi parmi la liste comprenant : vermiculite, gypse, et laine de roche, ciment, silicate de calcium, et oxyde de magnésium

## Description

### ART ANTERIEUR

Les pièces dans les bâtiments sont généralement équipées d'un réseau électrique. Ce réseau comprend une pluralité de dispositifs électriques incorporés dans les ouvrages tels que cloisons, contre-cloisons, plafonds : plan ou incliné, sols par exemple connectés entre eux avec des fils. À divers points, les fils doivent passer d'un côté à l'autre du panneau constitutif de l'ouvrage. Par exemple, ils peuvent être connectés à des dispositifs tels que des prises de courant et des interrupteurs. Pour cet exemple, des boîtiers de dérivation logent les connexions électriques afin de les protéger contre des dommages et de protéger des utilisateurs contre des décharges électriques. Pour cette raison, ces boîtiers de dérivation sont couramment fixés au point de traversée des fils dans le panneau constitutif de l'ouvrage. Les boîtiers de dérivation créent alors une ouverture par laquelle passent les fils.

Les ouvrages ont une certaine résistance au feu, mais la formation d'un trou dans le panneau constitutif de l'ouvrage crée un point faible local où cette résistance est réduite. Pour cette raison, il est nécessaire de rétablir la résistance au feu au droit des dispositifs.

### RÉSUMÉ DE L'INVENTION

La présente invention fournit un boîtier de protection incendie capable de capoter des dispositifs électriques, lequel est plus simple à utiliser et rétablit la résistance au feu de l'ouvrage équipé.

Dans ce but, la présente invention concerne un boîtier de protection incendie comprenant une paroi périphérique fermée par un fond pour former un logement dans lequel au moins un dispositif électrique est agencé, dans lequel la paroi périphérique comprend au moins une ouverture pour le passage d'au moins un fil électrique et dans lequel le boîtier de protection incendie est prévu pour être placé contre un panneau de construction constitutif d'une cloison, d'une contre-cloison, d'un plafond ou d'un sol, la paroi périphérique et le fond étant fabriqués à partir d'un matériau résistant à l'incendie comprenant au moins un parmi la liste de : vermiculite, gypse, et laine de roche, laine de verre, de la laine dite « haute température », un produit intumescent, ciment, silicate de calcium, et oxyde de magnésium. Le panneau constitutif de l'ouvrage peut être n'importe quel panneau approprié, y compris, mais sans s'y limiter des panneaux de constructions comprenant : du gypse, de la vermiculite, de la laine de roche, de la laine de verre, de la laine dite « haute température », un produit intumescent, du ciment, du silicate de calcium, de l'oxyde de magnésium.

Le dispositif électrique logé par le boîtier de protection incendie est un ou plusieurs parmi la liste comprenant : une prise de courant, un interrupteur, une prise de communication, une connexion d'éclairage, un détecteur, une alarme ou un dispositif d'éclairage.

Selon un exemple, la paroi périphérique et/ou le fond comprennent au moins deux parties.

Selon un exemple, la paroi périphérique et/ou le fond comprennent au moins une ouverture.

Selon un exemple, le boîtier de protection incendie comprend en outre des moyens de renforcement.

Selon un exemple, lesdits moyens de renforcement comprennent au moins une plaque fixée au fond et/ou à la paroi périphérique.

Selon un exemple, ladite plaque est une plaque en forme de U ou une plaque en forme de L ou une plaque plate.

Selon un exemple, une plaque en forme de U est prévue pour pincer la paroi périphérique et le fond.

Selon un exemple, les moyens de renforcement sont utilisés pour s'étendre sur le périmètre entier du boîtier de protection incendie.

L'invention concerne également une surface de construction comprenant au moins un panneau de construction approprié configuré de sorte qu'au moins un boîtier de protection incendie peut être fixé contre celle-ci, ledit panneau de construction comprenant au moins une ouverture prévue pour venir en butée contre le logement du boîtier de protection incendie.

Selon un exemple, un dispositif électrique est agencé au sein du logement du boîtier de protection incendie, ledit dispositif électrique comprenant au moins un parmi la liste comprenant : une prise de courant, un interrupteur, une prise de communication, une connexion d'éclairage, un détecteur, une alarme, ou un dispositif d'éclairage.

Là où le dispositif électrique comprend au moins un détecteur ou au moins un dispositif d'éclairage, l'ouverture peut être couverte par une grille, un panneau translucide ou un panneau transparent.

Selon un exemple, l'ouvrage comprend une ossature comprenant une pluralité d'éléments d'ossature sur laquelle le boîtier de protection incendie est fixée.

Selon un exemple, le boîtier de protection incendie comprend en outre un moyen de support de façon à être supporté par des tiges.

### DESCRIPTION DES FIGURES

D'autres caractéristiques et avantages particuliers apparaîtront clairement à la lecture de la description suivante, faite à titre indicatif et d'une manière complètement non limitative, en référence aux dessins annexés sur lesquels :
- les Figures 1 à 3 sont des représentations schématiques d'un boîtier de protection incendie selon l'invention ;
- la Figure 4 est une représentation schématique d'un boîtier de protection incendie avec un dispositif électrique selon l'invention ;
- les Figures 5 à 7 sont des représentations schématiques d'un boîtier de protection incendie selon l'invention fixé à un panneau constitutif de l'ouvrage ;
- les Figures 8 et 9 sont des représentations schématiques d'un boîtier de protection incendie selon l'invention utilisé dans un plafond ;
- les Figures 10 à 14 sont des représentations schématiques d'un boîtier de protection incendie selon l'invention comprenant un moyen de renforcement 18 ;
- les Figures 15 et 16 sont des représentations schématiques d'un boîtier de protection incendie selon l'invention apte à supporter plusieurs dispositifs électriques.

### DESCRIPTION DÉTAILLÉE DE L'INVENTION

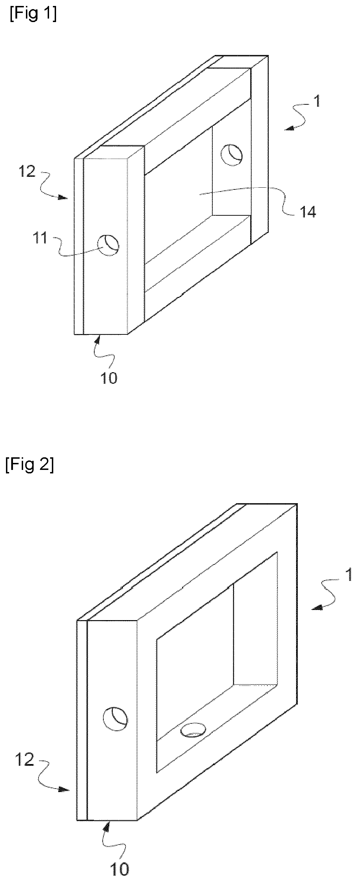

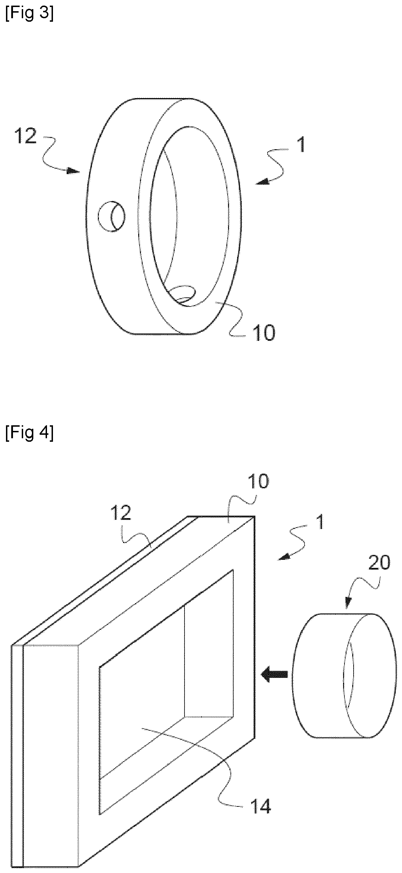

Les Figures 1 et 2 montrent le boîtier de protection incendie 1 pour un dispositif électrique selon l'invention. Ce boîtier de protection incendie 1 comprend une paroi latérale formant une paroi périphérique 10. Cette paroi périphérique 10 peut être percée de trous 11. Ce boîtier comprend également un fond 12 pour fermer le boîtier 1 sur un côté. La paroi périphérique 10 et le fond définissent un logement ouvert 14 dans lequel un dispositif électrique 20 est placé comme observé sur la figure 4. Le boitier de protection 1 est utilisé pour être mis en contact et fixé à une surface d'un ouvrage du type cloison, contre-cloison, plafond plan ou incliné, sols, l'ouvrage 100 comprenant au moins un panneau de construction. Ce boitier de protection 1 est mis en contact sur la surface d'un ouvrage 100 de sorte que le logement 14 soit en regard de ladite surface. La surface de l'ouvrage 100 sur laquelle le boîtier de protection incendie 1 est fixé comprend également une ouverture 30. Cette ouverture 30 est utilisée de sorte qu'il est possible d'avoir accès au dispositif électrique 20 dans le boîtier de protection 1 incendie depuis l'extérieur.

La paroi périphérique 10 pourrait être constituée d'un élément continu ou pourrait comprendre au moins deux parties. Le nombre de parties dépend de la forme du boîtier de protection incendie 1. En effet, le boîtier de protection incendie 1 pourrait être carré ou rectangulaire ou ovoïde comme représenté sur la figure 3. Dans un boîtier de forme carrée ou rectangulaire, la paroi périphérique 10 pourrait comprendre quatre parties, chaque partie formant un côté ou bord. En cas de paroi en forme ovoïde, ladite paroi pourrait être constituée de plusieurs parties.

Pour le fond du boîtier, le même raisonnement est possible. De préférence le fond 12 est constitué d'un élément unique, mais en variante le fond est constitué d'au moins deux éléments. Une variante de l'invention consiste en un ensemble de boîtiers de protection incendie 1 agencés conjointement pour former un boîtier de protection incendie de plus grandes dimensions. Ainsi, les parties et éléments du boitier sont considérés comme étant des pièces standard de sorte que tous les boîtiers de l'ensemble utilisent ces pièces standard pour former la paroi périphérique et le fond. On peut alors considérer que chaque boitier de protection est comme un élément unitaire, les éléments unitaires pouvant être associés pour former un ensemble plus grand. Cet exemple est disponible pour des boîtiers parallélépipédiques. Dans un exemple, le plus petit boîtier considéré comme l'élément unitaire est un carré de 10 cm, un plus grand boîtier pourrait être un boîtier rectangulaire de 10 cm de large et 30 cm de long, c'est-à-dire constitué de trois boitiers de 10cm x 10cm agencés les uns à côté des autres.

La paroi périphérique 10 et le fond 12 sont fixés l'un à l'autre au moyen d'au moins un moyen parmi un adhésif, des vis, ou des clous. On comprend alors qu'on peut cumuler un adhésif et des vis, par exemple.

La profondeur du boîtier de protection incendie 1 est définie par la hauteur de la paroi périphérique 10. Cette profondeur peut être définie de sorte que le dispositif électrique puisse être placé dans le logement 14 . Suivant le dispositif électrique 20 placé dans le logement 14, la profondeur de celui-ci peut varier. En effet, si le dispositif électrique est destiné à être caché alors la profondeur du logement 14 est adapté pour que le dispositif électrique soit totalement compris dans le logement. Néanmois, le boitier de protection 1 peut être tel que le dispositif électrique 20 dans le logement 14 puisse faire saillie de la surface de l'ouvrage. En effet, un dispositif électrique 20 comme un interrupteur ou une prise de courant doit pouvoir être accessible et utilisable. De ce fait, le logement 14 est calibré pour que sa profondeur associée à l'épaisseur de l'ouvrage puisse permettre une telle chose. Ce calibrage est fait pour permettre , ensuite, la mise en place d'un éventuel couvercle de protection comme celui pour une prise ou un interrupteur.

Pour obtenir une protection contre l'incendie, la paroi périphérique 10 et le fond 12 comprennent un matériau résistant à l'incendie. Ce matériau pourrait être au moins un parmi la liste comprenant : vermiculite, gypse, et laine de roche, laine de verre de la laine dite « haute température », un produit intumescent, ciment, silicate de calcium, et oxyde de magnésium.

La performance de protection incendie dépend du matériau et dépend des dimensions dudit boîtier 1. En effet, l'épaisseur de la paroi périphérique 12 et du fond est un paramètre important pour la performance incendie. Pour un type donné de matériau, une couche plus épaisse augmentera la performance incendie. Dans la protection incendie, la performance est définie par la quantité de temps qu'il faut pour qu'une partie de l'ouvrage atteigne une certaine température.

Dans un premier mode de réalisation, le boîtier de protection incendie 1 est utilisé pour loger un dispositif électrique 20. Le dispositif électrique 20 peut comprendre un ou plusieurs parmi la liste comprenant une prise de courant, un interrupteur, une prise de communication, une connexion d'éclairage, un détecteur, une alarme, ou un dispositif d'éclairage. Par exemple, le détecteur peut être un détecteur de fumée, un détecteur de chaleur, un détecteur de mouvement ou un autre capteur.

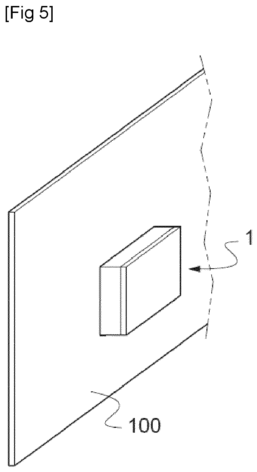

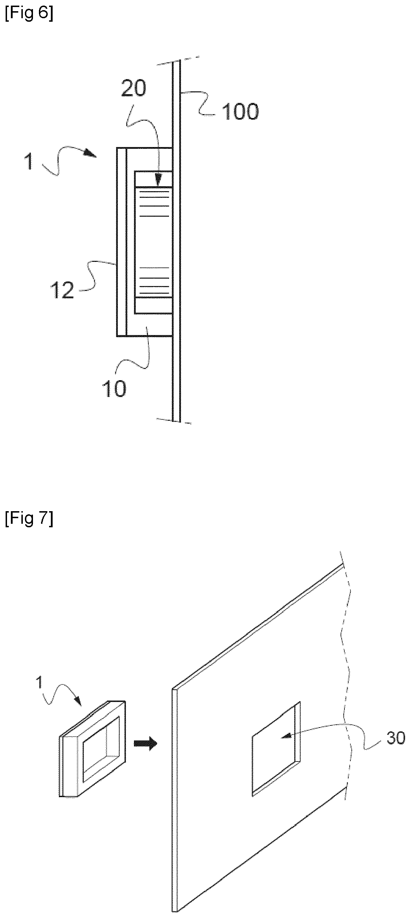

Le boîtier de protection incendie 1 est fixé à la surface de l'ouvrage P de sorte que le boîtier de protection incendie 1 est aligné avec l'ouverture 30 de l'ouvrage comme observé sur les figures 5 à 7. Le dispositif électrique 20 est placé dans le logement 14 du boîtier de protection incendie 1. Ainsi, le dispositif électrique 20, tel qu'une prise de courant, un commutateur, un élément d'éclairage, ou une prise de communication (RJ 45 - Ethernet par exemple) pourrait être mis en position dans le boîtier de protection incendie à partir du côté accessible de l'ouvrage. Le boîtier de protection incendie 1 est fixé à l'ouvrage au moyen d'un adhésif, d'une ou plusieurs vis, ou d'un ou plusieurs clous.

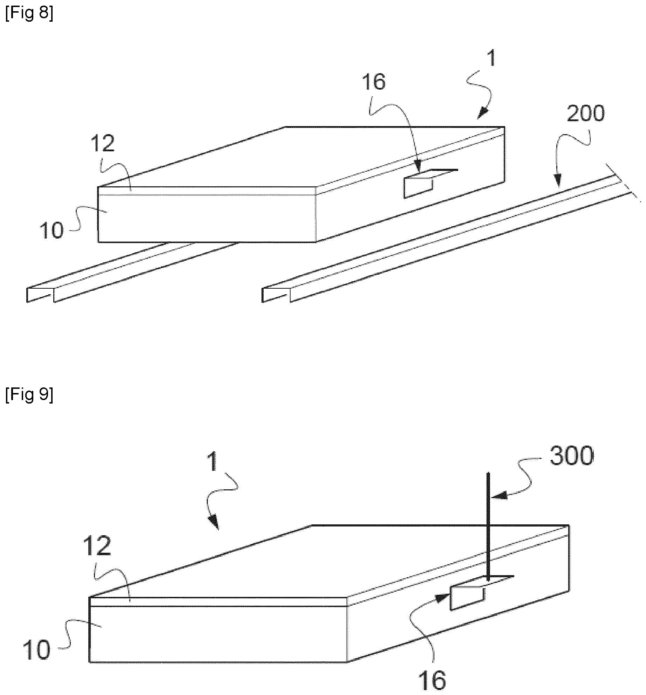

Dans un deuxième mode de réalisation comme observé sur les figures 8 et 9, le boîtier de protection incendie 1 comprend au moins un moyen de support 16 qui est configuré pour supporter le boîtier de protection incendie 1 sur au moins un élément d'ossature de l'ouvrage. Le au moins un moyen de support 16 est agencé sur un côté externe du boîtier de protection incendie 1. Le au moins un moyen de support 16 est un profilé en forme de L ou de U. En variante, le au moins un moyen de support 16 est une plaque plate. Cette plaque plate est fixée au fond 12 du boîtier de protection incendie 1 de sorte que des parties d'extrémité de la section plate dépassent pardessus le côté externe du boîtier de protection incendie 1.

En variante, dans des exemples où la surface de construction est un ouvrage vertical comme une cloison, le moyen de support 16 peut être fixé à un ou plusieurs éléments d'ossature de la cloison, la fixation à cet élément d'ossature se faisant par adhésif, des vis ou des clous.

Le boîtier de protection incendie 1 du deuxième mode de réalisation est utilisé pour loger un ou plusieurs dispositifs électriques 20 parmi la liste de : une prise de courant, un interrupteur, une prise de communication, une connexion d'éclairage, un détecteur, une alarme, ou un dispositif d'éclairage.

Dans un premier exemple du deuxième mode de réalisation, le moyen de support 16 est utilisé faire reposer le boîtier de protection incendie 1 sur une ossature 200. Cette ossature 200 comprend une pluralité d'éléments d'ossature comme des profilés. Cette ossature 200 supporte l'ouvrage 100. Le boîtier de protection incendie 1 est ainsi agencé pour être supporté par le ou les profilés. Le moyen de support 16 est fixé au profilé au moyen d'au moins d'un adhésif, de vis, ou des clous. En variante, le boitier de protection 1 comprend deux moyens de support 16 ou plus, ces moyens de support peuvent être configurés de sorte que le boîtier de protection incendie peut simplement être posé sur l'élément de cadre sans fixation, comme montré sur la Figure 8.

Dans un deuxième exemple, le boîtier de protection incendie 1 est prévu pour être suspendu. Pour ce faire, le moyen de support 16 est configuré pour recevoir une tige 300, comme montré sur la Figure 9. Cette tige, qui peut être une tige filetée, est également fixée au plancher supérieur, ou à tout autre support dédié comme une charpente métallique ou bois.

Ce deuxième mode de réalisation peut être particulièrement utile pour une installation du boîtier de protection incendie 1 dans des plafonds. De plus, lorsque le dispositif électrique est un dispositif d'éclairage, un détecteur ou une alarme, l'ouverture 30 du plafond peut être fermée avec une grille, un panneau translucide ou un panneau transparent.

Dans ces deux modes de réalisation, le dispositif électrique 20 doit être alimenté en électricité. Pour ce faire, la paroi périphérique et/ou le fond comprend au moins une ouverture 11 appropriée pour au moins un fil électrique ou un gainage électrique comprenant au moins un fil à faire passer.

Dans une variante, le dispositif électrique 20 placé dans ledit boîtier de protection incendie 1 fait partie d'un réseau ou ensemble comprenant au moins deux dispositifs. Dans ce cas, la paroi périphérique et/ou le fond comprennent au moins deux ouvertures 11 ou trous traversants. La première ouverture est agencée pour recevoir au moins un fil ou un gainage électrique comprenant au moins un fil entrant dans le logement et la deuxième ouverture est agencée de sorte que l'au moins un fil ou un gainage électrique comprenant au moins un fil peut sortir du logement du boîtier de protection incendie 1.

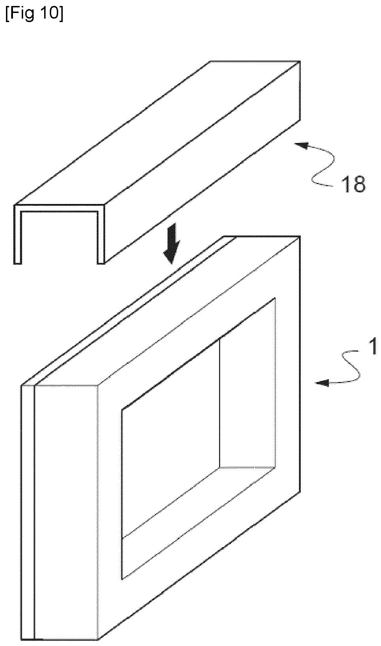

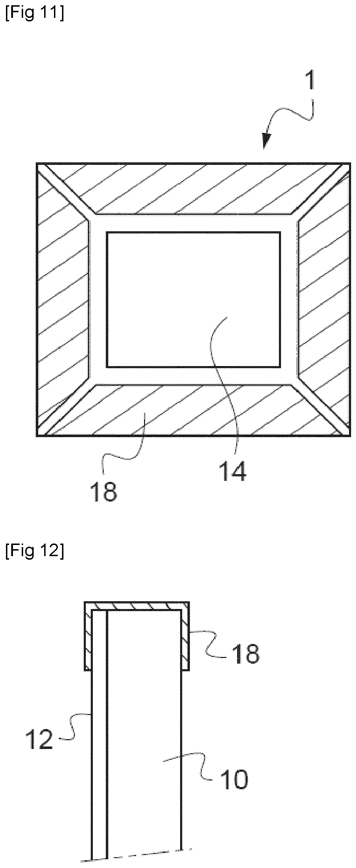

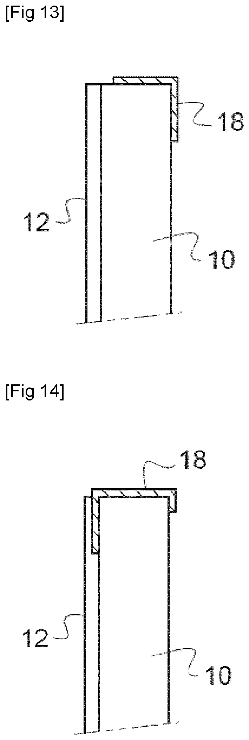

Dans une autre variante, le boîtier de protection incendie 1 comprend en outre des moyens de renforcement 18 comme observé sur les figures 10 à 14. Ces moyens de renforcement 18 sont utilisés parce que certains matériaux pourraient être sensibles aux chocs. En effet, les panneaux de gypse ou de vermiculite sont sensibles aux chocs de sorte que, lorsque l'utilisateur manipule le boîtier de protection incendie, des dommages peuvent se produire. Pour éviter cela, les moyens de renforcement 18 sont utilisés pour protéger le boîtier de protection incendie. De plus, les moyens de renforcement 18 peuvent aider à maintenir des pièces du boîtier de protection incendie ensemble.

Les moyens de renforcement 18 comprennent au moins une plaque de renforcement. Cette plaque de renforcement est fabriquée en métal ou alliage ou en plastique ou en n'importe quel matériau rigide approprié. Cette plaque de renforcement est une plaque plate ou est une plaque en forme de U ou une plaque en forme de L. Cette plaque de renforcement est agencée sur la paroi périphérique et/ou sur le fond. En effet, en cas de plaque de renforcement en forme de L ou de plaque en forme de U, cette plaque de renforcement pourrait être exclusivement en contact avec la paroi périphérique ou avec le fond. Mais, il est également possible que la plaque en forme de L ou la plaque en forme de U soit en contact avec la paroi périphérique et le fond.

La plaque de renforcement en forme de L est définie comme une feuille métallique ou non métallique comprenant une face sensiblement plane connectée de manière sensiblement perpendiculaire à une deuxième face sensiblement plane.

La plaque de renforcement en forme de U est définie comme une feuille métallique ou non métallique comprenant une paire de rebords sensiblement parallèles l'un à l'autre et connectés de manière sensiblement perpendiculaire au niveau de leur base par une bande.

Cette plaque de renforcement est fixée au boîtier de protection incendie 1 au moyen d'un adhésif, de vis ou de clous.

Dans le cas d'une plaque en forme de U, ladite plaque en forme de U peut être utilisée pour fixer la paroi périphérique 10 et le fond 12. Dans ce cas, la plaque en forme de U est conçue de sorte que l'espace entre les branches parallèles soit suffisant pour que la paroi périphérique 10 et le fond 12 puissent s'insérer dans ledit espace. Dans ce cas, il est possible d'utiliser un adhésif, des vis ou des clous pour fixer la plaque des moyens de renforcement 18 à la paroi périphérique et au fond. Mais, il est également possible d'utiliser la plaque en forme de U en tant que pince. Dans ce cas, les branches de cette plaque en forme de U sont conçues pour exercer une force sur la paroi périphérique 10 et le fond 12 agencés entre ces branches lors d'une insertion.

Les moyens de renforcement 18 comprennent une plaque mais ils peuvent comprendre plus d'une plaque. La plaque ou les plaques sont conçues pour s'étendre sur le périmètre entier du boîtier de protection incendie ou pour s'étendre sur une partie de ce périmètre.

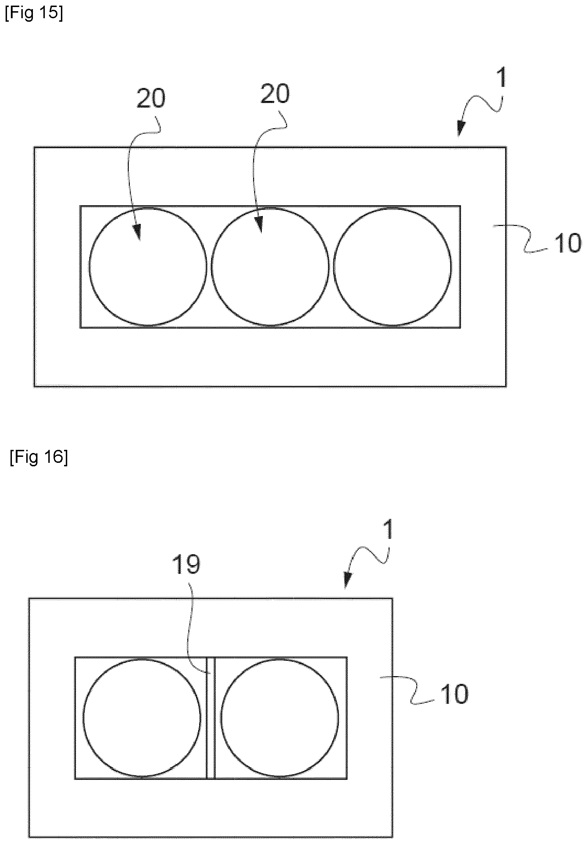

Dans une variante, le boîtier de protection incendie 1 est utilisé pour contenir au moins deux dispositifs électriques comme observé sur la figure 15. Pour ce faire, le logement formé par la paroi périphérique est tel que le volume au sein du logement est suffisamment grand pour placer au moins deux dispositifs électriques, lesdits dispositifs pourraient être des dispositifs différents. Par exemple, il est possible d'avoir, dans le même boîtier de protection incendie, le dispositif électrique 20 pour une prise de courant et un interrupteur. Dans cette variante, le logement pourrait être séparé en au moins deux zones en utilisant une paroi de séparation 19 comme observé sur la figure 16. Cette paroi, fabriquée dans le même matériau que la paroi périphérique, est utilisée pour isoler chaque zone l'une de l'autre.

Dans une variante, le boîtier de protection incendie 1 fait partie d'un kit comprenant ledit boîtier et quelques bouchons. Ces bouchons sont utilisés pour être insérés dans des ouvertures inutilisées. Ceci augmente la performance de protection incendie du boîtier de protection incendie 1. Les bouchons sont constitués du même matériau que la paroi périphérique. De préférence, les bouchons sont fabriqués avec le matériau retiré pour former l'ouverture.

Bien entendu, la présente invention ne se limite pas à l'exemple illustré mais est susceptible de diverses variantes et modifications qui apparaîtront à l'homme de l'art.

En effet, il est possible que le fond 12 se présente autrement que sous la forme d'au moins une plaque. Pour cela, une première solution consiste à utiliser un produit pâteux comme fond 12. Ainsi, l'utilisation du boitier de protection selon cette solution consiste à fixer la paroi périphérique, associée ou non avec ou un des moyens de renforcement 18, puis à placer le dispositif électrique 20. Le produit pâteux est ensuite appliqué pour former le fond 12, le but étant de former une continuité dans la protection anti incendie. Dans une seconde solution, la fonction du fond 12 est opérée par un élément de maçonnerie. Effectivement, selon l'espacement entre l'ouvrage du type cloison, sol, plafond et la maçonnerie, il est possible d'insérer la paroi périphérique entre l'ouvrage et la maçonnerie. Dans ce cas, la paroi périphérique est plaquée contre la maçonnerie qui fait office de fond.

## Revendications

1. Boîtier de protection incendie (1) comprenant une paroi périphérique (10) fermée par un fond (12) pour former un logement (14) configuré pour recevoir au moins un dispositif électrique (20), dans lequel au moins un parmi la paroi périphérique et le fond comprend au moins une ouverture (11) pour le passage d'au moins un fil électrique ou un gainage électrique comprenant au moins un fil électrique et dans lequel la paroi périphérique et le fond comprennent au moins un matériau résistant à l'incendie choisi parmi la liste comprenant : vermiculite, gypse, et laine de roche, laine de verre, laine dite « haute température », produit intumescent, ciment, silicate de calcium, et oxyde de magnésium.

2. Boîtier de protection incendie selon la revendication précédente dans lequel la paroi périphérique et/ou le fond comprennent au moins deux parties.

3. Boîtier de protection incendie selon l'une des revendications précédentes dans lequel la paroi périphérique et/ou le fond comprennent au moins deux ouvertures.

4. Boîtier de protection incendie selon l'une des revendications précédentes dans lequel il comprend en outre des moyens de renforcement (18).

5. Boîtier de protection incendie selon la revendication précédente, dans lequel les moyens de renforcement (18) comprennent au moins une plaque de renforcement fixée au fond et/ou à la paroi périphérique.

6. Boîtier de protection incendie selon la revendication précédente, dans lequel ladite plaque de renforcement est une plaque en forme de U ou une plaque en forme de L ou une plaque plate.

7. Boîtier de protection incendie selon la revendication précédente dans lequel une plaque de renforcement en forme de U est prévue pour pincer la paroi périphérique et le fond.

8. Boîtier de protection incendie selon l'une quelconque des revendications 5 à 7, dans lequel les moyens de renforcement sont utilisés pour s'étendre sur le périmètre entier du boîtier de protection incendie.

9. Ouvrage (100) comprenant au moins un panneau de construction contre lequel au moins un boîtier de protection incendie est fixé, ledit panneau de construction comprenant au moins une ouverture (30) alignée avec le logement (14) du boîtier de protection incendie, dans lequel ladite protection incendie est selon la revendication 1.

10. Ouvrage selon la revendication 9, dans lequel un dispositif électrique est agencé dans le logement du boîtier de protection incendie, ledit dispositif électrique comprenant un ou plusieurs parmi la liste de : une prise de courant, un interrupteur, une prise de communication, une connexion d'éclairage, un détecteur, une alarme, ou un dispositif d'éclairage.

11. Ouvrage selon les revendications 9 ou 10, comprenant une ossature comprenant une pluralité d'éléments d'ossature sur laquelle le boîtier de protection incendie est fixé.

12. Ouvrage selon les revendications 9 ou 10, dans lequel le boîtier de protection incendie comprend en outre un moyen de support (16) de façon à être supporté par des tiges.

13. Ouvrage selon l'une quelconque des revendications 9 à 12, dans lequel le dispositif électrique est un dispositif d'éclairage, un détecteur ou une alarme, et dans laquelle une grille, un panneau translucide ou un panneau transparent est placé dans l'ouverture du panneau de l'ouvrage.
